# EUROPÄISCHE PATENTSCHRIFT

(11) **EP 2 235 230 B1**
(45) Veröffentlichungstag und Bekanntmachung des Hinweises auf die Patenterteilung: **26.10.2016**
(21) Anmeldenummer: 08859672.1
(22) Anmeldetag: 29.10.2008
(51) Int. Cl.: C23C 8/26, C23C 8/32, C23C 8/50, C23C 8/56, C23C 22/02

(54) **VERFAHREN ZUR ERZEUGUNG VON KORROSIONSBESTÄNDIGEN OBERFLÄCHEN NITRIERTER ODER NITROCARBURIERTER BAUTEILE AUS STAHL**
METHOD FOR PRODUCING CORROSION-RESISTANT SURFACES OF NITRATED OR NITROCARBURATED STEEL COMPONENTS
PROCÉDÉ POUR PRODUIRE DES SURFACES RÉSISTANTES À LA CORROSION SUR DES PIÈCES NITRURÉES OU NITROCARBURÉES EN ACIER

(30) Priorität: 13.12.2007 DE 102007060085
(43) Veröffentlichungstag der Anmeldung: 06.10.2010
(73) Patentinhaber: Durferrit GmbH, 68169 Mannheim (DE)
(72) Erfinder: BAUDIS, Ulrich, 63755 Alzenau (DE)
(74) Vertreter: Ruckh, Rainer Gerhard
(86) Internationale Anmeldenummer: PCT/EP2008/009141
(87) Internationale Veröffentlichungsnummer: WO 2009/074194

(56) Entgegenhaltungen:
- EP-A- 0 733 720
- DE-T2- 69 200 127
- US-A1- 2002 038 679

## Beschreibung

Die Erfindung betrifft ein Verfahren zur Erzeugung von korrosionsbeständigen Oberflächen nitrierter oder nitrocarburierter Bauteile aus Stahl.

Das Nitrieren und Nitrocarburieren von Stahloberflächen wird seit Jahrzehnten angewendet, um die Verschleißfestigkeit und die Dauerschwingfestigkeit von Bauteilen aus Stahl zu erhöhen. Tausende von Anwendungen sind bekannt, als Beispiel sei das Nitrieren von Kurbelwellen und das Nitrocarburieren von Nockenwellen im Automobilbau genannt.

Nitrieren und Nitrocarburieren sind sehr ähnliche Prozesse. Im Fall des Nitrierens wird das Element Stickstoff in die Bauteiloberfläche eingebracht, im Falle des Nitrocarburierens diffundiert Stickstoff und in geringerem Maße auch Kohlenstoff in die Bauteiloberfläche. Die Prozesse werden üblicherweise bei Temperaturen zwischen 540 und 630°C, meistens bei 580 bis 610°C durchgeführt. Wegen der kürzeren Prozesszeiten hat sich in der industriellen Technik das Nitrocarburieren stärker durchgesetzt. Das Nitrocarburieren kann in Gasen, im Plasma oder in geschmolzenen Salzen durchgeführt werden.

Beim Nitrocarburieren bildet sich auf der Bauteiloberfläche eine kompakte Schicht aus Eisennitrid, in der - sofern der Stahl legiert ist - auch Nitride und Carbonitride der Legierungselemente enthalten sind. Diese Schicht wird als "Verbindungsschicht" bezeichnet. Sie ist neben einer darunter liegenden Diffusionszone in erster Linie verantwortlich für die Steigerung der Härte, der Zähigkeit und der Verschleißbeständigkeit. Die Dicke der Verbindungsschicht ist vom Werkstoff, der Prozessdauer und der Temperatur abhängig und beträgt üblicherweise etwa 20 µm. Im äußeren Bereich ist die Verbindungsschicht stets porös, das heißt von feinen Poren durchsetzt. Diese so genannte Porenzone reicht im allgemeinen bis in eine Tiefe von 10 - 50 % der Schichtdicke der Verbindungsschicht. Bei einer Verbindungsschichtdicke von 20 µm wird man im allgemeinen eine Porenzone von 2 bis 10 µm finden.

Es ist bekannt, dass nitrierte oder nitrocarburierte Stahloberflächen zusätzlich zu der oben erwähnten Verschleißfestigkeit auch eine hohe Korrosionsbeständigkeit aufweisen, wenn sich an die Nitrocarburierung eine Oxidation der Oberfläche anschließt. Durch die Oxidation wird auf der Verbindungsschicht eine dünne, kompakte Eisenoxidschicht erzeugt, die Bruchteile eines Mikrometers bis hin zu einigen Mikrometern dick sein kann. Zudem werden die Poren der Verbindungsschicht mit Eisenoxid gefüllt. So entsteht auf der nitrocarburierten Oberfläche eine Passivschicht, die hauptsächlich aus dem schwarzen Eisenoxid Magnetit (Fe₃O₄) besteht und dem Bauteil eine hohe Korrosionsbeständigkeit verleiht.

Die Oxidation nitrocarburierter Schichten kann mit Gasen wie Kohlendioxid, Stickoxid oder Wasserdampf erfolgen. Man kann auch geschmolzene Salze zur Oxidation verwenden, meist benutzt man Salzgemische aus Alkalihydroxiden, Alkalinitraten und -nitriten sowie -carbonaten.

So behandelte, das heißt nitrocarburierte und oxidierte Bauteile weisen neben der erhöhten Verschleißbeständigkeit auch eine bemerkenswerte Erhöhung der Korrosionsbeständigkeit auf. Zum Beispiel wird die Korrosionsbeständigkeit - gemessen in Anlehnung an die Norm DIN EN ISO 9227 : 2006 - von unlegiertem Stahl C15 gegen 1 %-ige Kochsalzlösung bei 35°C von 1 h auf 12-24 h erhöht, wenn die Oberfläche in geschmolzenen Salzen nitrocarburiert wurde. Wird die Bauteiloberfläche nach der Nitrocarburierung noch zusätzlich oxidiert, so erhöht sich die Korrosionsbeständigkeit jedoch wesentlich weiter auf Werte von 500 h und mehr. Sie übertrifft damit die Korrosionsbeständigkeit der meisten galvanisch abgeschiedenen Schichten, wie Nickel oder Hartchrom, die für ähnliche Zwecke eingesetzt werden. Außerdem weisen die nitrocarburierten und nachoxidierten Schichten eine angenehm dekorative schwarze Farbe auf.

Neben diesen positiven Aspekten des Nitrocarburierens und Oxidierens von Stahloberflächen treten aber auch Probleme auf, die häufig übersehen werden.

Viele Bauteile - etwa hydraulische Zylinder, Gasdruckfedern, Kugelbolzen, Kugelgelenke, pneumatische Zylinder - dürfen eine gewisse Rauigkeit an den Funktionsflächen nicht überschreiten. Nun wird aber die Rauigkeit der Bauteiloberfläche durch das Nitrieren beziehungsweise Nitrocarburieren erhöht. Das anschließende Oxidieren erhöht die Rauigkeit nur noch geringfügig. Als Maß für die Rauigkeit beziehungsweise für die Veränderung der Rauigkeit einer Oberfläche hat sich die Messung des Rz-Wertes, so bezeichnet als maximale Rauheitsprofilhöhe und gemessen nach der Norm DIN EN ISO 4287, bewährt. Die Grenze der zulässigen Rauigkeit liegt bei oben genannten Bauteilen bei einem Rz-Wert von 1,5 µm.

Als Faustregel gilt für Bauteile, die in der Hydraulik, der Pneumatik oder in Gasdruckfedern eingesetzt werden, folgendes:
Bauteile, die in diesen Funktionsbereichen eingesetzt werden, dürfen eine Rauigkeit von Rz = 1,5 µm nicht überschreiten. Im Allgemeinen liegen die Rauigkeiten solcher Bauteile sogar unter 1,0 µm Rz.

Die praktische Erfahrung lehrt, dass eine Anfangsrauigkeit von 0,5 bis 1,5 µm Rz eines unbehandelten Bauteils durch das Nitrocarburieren in geschmolzenen Salzen verdoppelt bis verdreifacht wird und durch das anschließende Oxidieren auf das vierfache des ursprünglichen Rz-Wertes erhöht wird, also beispielsweise von Rz = 1 µm im Urzustand auf Rz = 3 µm nach dem Nitrocarburieren und Rz = 3,5 - 4 µm nach Nitrocarburieren und Oxidieren.

Diese Rauigkeit muss durch Polieren der Bauteile wieder auf den notwendigen Rz - Wert unter 1,5 µm, meistens unter Rz = 1 µm zurück gebracht werden. In der industriellen Technik wird dazu wie folgt vorgegangen:
Nach dem Nitrocarburieren in einer Salzschmelze aus Cyanat, Cyanid und Carbonat wird das Bauteil in eine oxidierende Schmelze aus Alkali-Hydroxid, - Carbonat, -Nitrat und -Nitrit übergeführt und dort an der Oberfläche oxidiert. Gleichzeitig werden anhaftende Reste der Nitrocarburierschmelze oxidiert, das heißt Cyanate und kleine Mengen Cyanid, die an den im Salzbad nitrocarburierten Bauteilen anhaften, werden zu Carbonat oxidiert. Anschließend werden die Bauteile in Wasser abgeschreckt. Sie weisen dann bereits die erwünschte schwarze Farbe, Verschleißbeständigkeit und Korrosionsfestigkeit auf. Jedoch ist, wie beschrieben, die Rauigkeit zu hoch und hat den doppelten, dreifachen oder sogar vierfachen Wert der Ausgangsrauigkeit. Die Bauteile werden deshalb von den Chargiergestellen abgenommen und poliert. Dabei wird mit Polierscheiben, Polierbändern, durch Strahlen mit Glasperlen oder durch Gleitschleifen mit Poliersteinen in Vibrations-Poliermaschinen wieder eine den Anforderungen entsprechende Rauigkeit von etwa Rz = 1 µm oder weniger auf der oxidierten Oberfläche erzeugt.

Durch dieses Polieren wird nun aber ein Teil der korrosionsbeständigen Passivschicht abgetragen, wodurch die Korrosionsbeständigkeit der nach einmaliger Oxidation und Polieren verbliebenen Schicht nicht mehr den Anforderungen genügt. Aus diesem Grund wird das nitrierte, oxidierte und polierte Bauteil noch einmal auf Chargiergestelle gesetzt und in die oxidierende Salzschmelze für einen Zeitraum von 15 bis 60 Minuten, meistens 30 Minuten, eingebracht. Dabei wird die durch das Polieren angegriffene Oberfläche erneut oxidiert und quasi repariert. Die zweite Oxidation erfolgt in der gleichen Oxidationsschmel-Oxidationsschmelze wie die erste Oxidation. Bei diesem zweiten Oxidieren erfolgt keine nennenswerte Erhöhung der Rauigkeit, da die Poren bereits oxidiert und die Spitzen der Verbindungsschicht bereits abgetragen sind. Nach der zweiten Oxidation werden die Bauteile wiederum in Wasser abgeschreckt, eventuell mittels Filzscheiben oder Tüchern ohne abrasive Medien abgewischt, beziehungsweise von Wasserflecken und anhaftenden oberflächlichen Verschmutzungen gereinigt und geölt. Sie sind dann einbaufertig. Diese Verfahrensweise wird in der Technik als QPQ-Prozess bezeichnet. Die Abkürzung steht für Quench-Polish-Quench. "Q" steht dabei jeweils für die Oxidation in einer oxidierenden Salzschmelze.

Diese Verfahrensweise führt bei Kugelgelenkbolzen oder Kolbenstangen für Gasdruckfedern zu ausgezeichneter Korrosionsbeständigkeit und genügend glatten und verschleissbeständigen Oberflächen mit Rauigkeitskennwerten von Rz < 1,5 µm, meistens sogar unter 0,7 µm.

Diese bist heute großtechnisch übliche Verfahrensweise hat aber einen markanten wirtschaftlichen Nachteil. Nach dem Oxidieren der Oberfläche müssen die Bauteile aus den Chargiergestellen entnommen und auf Poliermaschinen gesetzt werden. Nach dem Polieren müssen die Teile erneut gereinigt werden und noch einmal - meist in manueller Arbeit - auf Chargiergestelle zurück gesetzt werden, um der zweiten Oxidation im QPQ-Verfahrensablauf zugeführt zu werden.

Die EP 0 733 720 A1 betrifft ein Verfahren zur Herstellung einer oberflächenbehandelten Kolbenstange für einen hydraulischen Schwingungsdämpfer. Die unbehandelte Kolbenstange wird zunächst gehärtet und nachfolgend geschliffen. Danach wird die Oberfläche der Kolbenstange einem Nitrierprozess unterworfen wird, welcher eine gehärtete äußere Verbindungsschicht und eine darunterliegende Diffusionsschicht erzeugt. Letztlich wird die nitriergehärtete Oberfläche der Kolbenstange zunächst einem weiteren Feinschliff und anschließend einer Oxidierung unterzogen. Im Anschluss an die Oxidierung wird die Kolbenstangenoberfläche einem Prägepolieren unterzogen.

Die US 2002/0038679 A1 betrifft ein Verfahren zur Oberflächenbehandlung von mechanischen Bauteilen. In einem ersten Verfahrensschritt erfolgt eine Nitrierung der Bauteile in einem Salzbad. Anschließend erfolgt eine Oxidierung der Bauteile in einer wässrigen Lösung bei einer Temperatur kleiner als 200°C.

Der Erfindung liegt die Aufgabe zugrunde, ein rationelles Verfahren zur Erzeugung nitrierten oder nitrocarburierten Bauteilen mit korrosionsbeständigen Oberflächen geringer Rauigkeit bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Das erfindungsgemäße Verfahren dient zur Erzeugung von korrosionsbeständigen Oberflächen nitrierter oder nitrocarburierter Bauteile aus Stahl, wobei die Oberflächen Rauigkeitsprofilhöhen Rz mit Rz ≥ 1,5 µm aufweisen, und umfasst folgende Verfahrensschritte: Oxidation der Oberflächen der nitrierten oder nitrocarburierten Bauteile als erster Oxidationsschritt, Durchführen wenigstens einer zweiten Oxidation der Bauteiloberflächen in einem unmittelbar anschließenden vom ersten Oxidationsschritt verschiedenen Oxidationsschritt, Polieren der Bauteiloberfläche in einem abschließenden, unmittelbar auf die letzte Oxidation anschließenden Verfahrensschritt.

Mit dem erfindungsgemäßen Verfahren wird eine rationelle Herstellung von korrosionsbeständigen Oberflächen mit geringen Rauigkeitshöhen bei nitrierten oder nitrocarburierten Bauteilen aus Stahl erhalten. Dies beruht darauf, dass das Polieren der Bauteiloberfläche ausschließlich den letzten Verfahrensschritt der Oberflächenbearbeitung bildet. Damit ist nur ein einmaliges Chargieren der Bauteile auf Gestellen notwendig, wobei auf diesen Gestellen die Bauteile nicht nur nitriert oder nitrocarburiert werden. Vielmehr werden auch sämtliche Oxidationsschritte zur Erzeugung der korrosionsbeständigen Oberflächen durchgeführt, so dass dann nach Dechargieren der Bauteile nur noch das Polieren als abschließender Verfahrensschritt erfolgen muss.

Im Gegensatz zu dem aus dem Stand der Technik bekannten QPQ-Verfahren, mit welchem ebenfalls korrosionsbeständige Bauteiloberflächen geringer Rauigkeit erhalten werden, müssen die Oxidationsbehandlungen nicht mehr durch Polierschritte unterbrochen werden, so dass das bisher erforderliche mehrfache Chargieren und Dechargieren der Bauteile entfällt.

Das erfindungsgemäße Verfahren führt zu einer Prozesszeitverkürzung von circa 25 % und einer Prozesskostenersparnis von 20 bis 35 % verglichen mit einer QPQ-Prozessabfolge, die gleiche Ergebnisse bezüglich der Rauigkeit und Korrosionsbeständigkeit liefert.

Voraussetzung für das erfindungsgemäße Verfahren ist die Verwendung geeigneter oxidierender Medien, die eine genügend starke, dichte und fest haftende Oxidschicht, das heißt chemische Passivschicht auf den Bauteilen erzeugen, so dass ein Polieren nach der Oxidation der nitrierten oder nitrocarburierten Oberfläche nicht mehr zu einer Verringerung der Korrosionsbeständigkeit führt, so dass ein Oxidieren nach dem Polieren nicht mehr notwendig ist.

Die Erfindung bildet einen QQP-Prozess oder allgemein einen QⁿP-Prozess, bei welchem unmittelbar nach dem Nitrieren oder Nitrocarburieren ein zweimaliger oder allgemein n-maliger Oxidationsprozess (Q = Quench) anschließt, wobei dann auf den letzten Oxidationsschritt unmittelbar der abschließende Poliervorgang folgt (P = Polish).

Im Falle des Nitrocarburierens von Bauteiloberflächen in geschmolzenen Salzbädern (Salzschmelze) ist es vorteilhaft, auf die erste Oxidation, die mit einer Entgiftungsreaktion gekoppelt ist, eine zweite Oxidation in einem anderen, separaten Salzbad oder in einem stark oxidierenden wässrigen, alkalischen Medium folgen zu lassen. Dabei kann die chemische Zusammensetzung des zweiten Oxidationsbades von der des ersten Oxidationsbades abweichen. Im Falle von gas- oder plasmagestützten Nitrocarburierverfahren sind die oxidierenden Medien meist Wasserdampf oder Gemische aus Wasserdampf, Sauerstoff, Luft oder Kohlendioxid. Die Prozessparameter der oxidierenden Medien, insbesondere die Haltezeit und die Temperatur, können unterschiedlich sein. Die Ursache für die Erzeugung einer polierfähigen Oberfläche ist darin zu sehen, dass durch die aufeinander folgende, mehrfache Oxidation (Q₁ - Qₙ) die gebildete Passivschicht aus Fe₃O₄ immer stärker mit der Werkstückoberfläche verbunden wird, und dass im Fe₃O₄ selbst enthaltene Poren durch die mehrfache, direkt aufeinander folgende Oxidation geschlossen werden.

Das erfindungsgemäße Verfahren eignet sich generell zur Erzeugung korrosionsbeständiger Bauteiloberflächen mit geringer Rauigkeit bei Bauteilen aus Stahl. Diese Bauteile können als Zylinder, Stempel oder Rohre in hydraulischen Systemen ausgebildet sein. Weiterhin können die Bauteile als Kegelbolzen, Kugelgelenke oder Kolbenstangen in Gasdruckfedern oder pneumatischen Systemen ausgebildet sein.

Die Erfindung wird im Folgenden anhand der Abbildungen und von Beispielen erläutert. Es zeigen:
- Figur 1:: Ablaufschema eines aus dem Stand der Technik bekannten QPQ-Prozesses.
- Figur 2:: Ablaufschema eines erfindungsgemäßen QQP-Prozesses.
- Figur 3:: Ablaufschema eines erfindungsgemäßen QⁿP-Prozesses.
- Figur 4:: Ablaufschema eines erfindungsgemäßen QP-Prozesses.

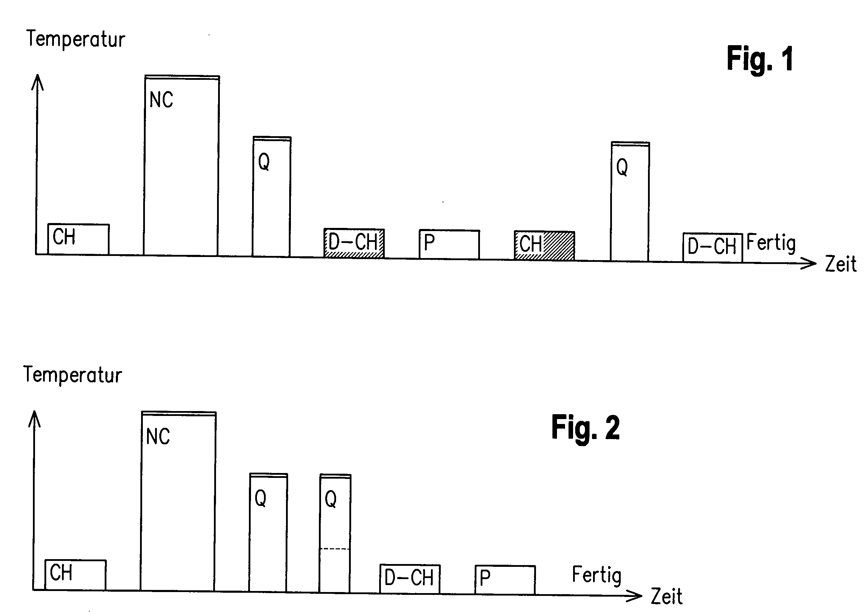

Figur 1 zeigt schematisch den Ablauf des aus dem Stand der Technik bekannten QPQ-Verfahrens zur Erzeugung korrosionsbeständiger Bauteiloberflächen mit geringen Rauigkeitshöhen für nitrocarburierte Bauteile aus Stahl.

In Figur 1 werden wie in den weiteren Figuren 2 bis 4 folgende Abkürzungen für die einzelnen Verfahrensschritte der dargestellten Prozesse verwendet.
- CH: Chargieren der Bauteile auf Gestelle
- NC: Nitrocarburieren oder Nitrieren der Bauteile
- Q, Q₁ bis Qₙ: Oxidieren der Bauteile
- D-CH: Dechargieren / Entnehmen der Bauteile von Gestellen
- P: Polieren der Bauteile

Dabei zeigen die Figuren 1 bis 4 qualitativ die Temperaturen für die einzelnen Verfahrensschritte.

Bei dem in Figur 1 dargestellten Verfahren werden die Bauteile zunächst auf Gestelle geladen, das heißt es erfolgt ein Chargieren (CH) der Bauteile. Dann werden die Bauteile nitrocarburiert (NC) und in einem anschließenden Verfahrensschritt oxidiert (Q). Anschließend erfolgt ein Dechargieren (D-CH) der Bauteile, das heißt ein Abnehmen von den Gestellen, um im anschließenden Verfahrensschritt die Bauteile polieren (P) zu können, wodurch die Oberflächen auf Rauigkeitshöhen < 1,5 µm reduziert werden können. Dies ist jedoch verbunden mit einer Beeinträchtigung der Korrosionsbeständigkeit der Bauteiloberfläche, so dass zu einer Nachbehandlung die Bauteile wieder auf die Gestelle geladen werden müssen, um sie danach nochmals einer Oxidationsbehandlung (Q) zuzuführen.

Figur 2 zeigt eine erste Ausführungsform des erfindungsgemäßen Verfahrens. Dieses Verfahren stellt einen QQP-Prozess dar. In einem ersten Verfahrensschritt erfolgt das Chargieren (CH) der Bauteile auf Gestellen. Anschließend erfolgt das Nitrocarburieren (NC) der Bauteile. Unmittelbar darauf folgen zwei Oxidationsprozesse (Q), das heißt die Bauteile werden in zwei unmittelbar aufeinander folgenden Oxidationsschritten oxidiert. Danach erfolgt das Dechargieren (D-CH) der Bauteile und anschließend das Polieren (P) der Bauteile. Durch das Polieren werden für die Bauteiloberfläche Rauigkeitshöhen von Rz < 1,5 µm erhalten. Durch die beiden zuvor durchgeführten Oxidationsschritte werden genügend starke, dichte und haftfähige Oxidationsschichten auf den Bauteiloberflächen erhalten, so dass durch das Polieren die Korrosionsbeständigkeit der Bauteiloberflächen nicht nennenswert beeinträchtigt wird. Ein auf den Poliervorgang weiterer Oxidationsschritt ist daher nicht mehr nötig, das heißt der Poliervorgang bildet den letzten Verfahrensschritt des Verfahrens. Damit aber können die beim QPQ-Verfahren noch notwendigen Zwischenschritte eines Dechargierens und Chargierens nach dem Poliervorgang (in Figur 1 schraffiert dargestellt) vermieden werden, wodurch eine erhebliche Zeit- und Kosteneinsparung erzielt wird.

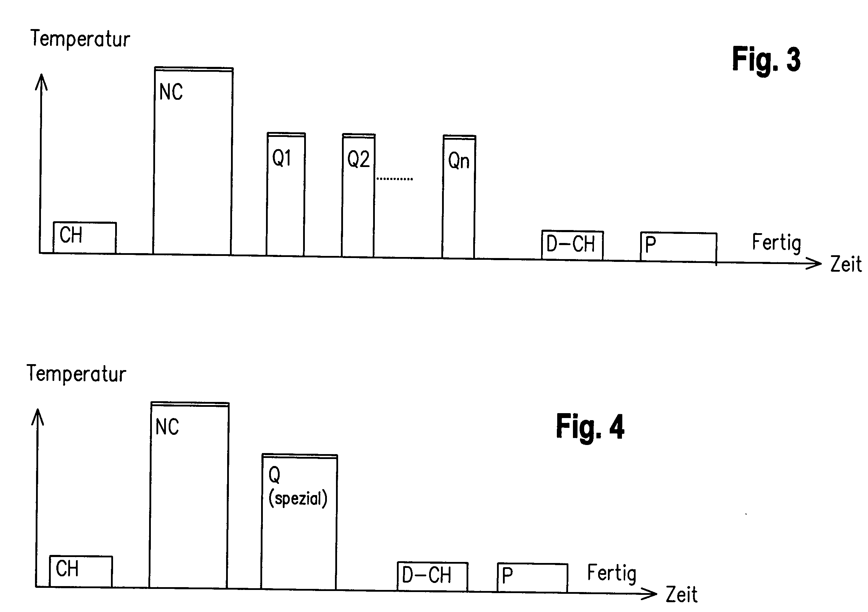

Die in Figur 3 dargestellte zweite Ausführungsform des erfindungsgemäßen Verfahrens stellt einen QⁿP-Prozess dar. Dieses Verfahren unterscheidet sich von der Ausführungsform gemäß Figur 2 nur dadurch, dass anstelle zweier Oxidationsschritte nun n Oxidationsschritte Q₁ ... Qₙ unmittelbar auf das Nitrocarburieren der Bauteile folgen. Auch bei diesem QⁿP-Prozess werden die beim QPQ-Verfahren gemäß Figur 1 noch notwendigen Zwischenprozesse des Dechargierens vor dem Polieren und des Chargierens nach dem Polieren (in Figur 1 schraffiert dargestellt) eingespart.

Bei den Verfahren gemäß den Figuren 2 und 3 können zur Durchführung sämtlicher Oxidationsschritte (das heißt beider Q-Prozesse in Figur 2 und der Prozesse Q₁ ... Qₙ in Figur 3) Salzschmelzen eingesetzt werden.

Die Salzschmelzen für die einzelnen Oxidationsschritte können unterschiedliche Zusammensetzungen aufweisen. Die Prozessbedingungen für die Oxidationsschritte können dann identisch oder unterschiedlich ausgebildet sein.

Alternativ können für die einzelnen Oxidationsschritte Salzschmelzen mit identischen Zusammensetzungen verwendet werden, wobei sich dann die Oxidationsschritte hinsichtlich der Prozessbedingungen, insbesondere der Haltezeit und der Temperatur, unterscheiden.

Die Salzschmelze zur Durchführung eines Oxidationsschritts in den genannten Verfahren besteht aus folgenden Komponenten:
10 - 50 Gew.% NaNO₃
0 - 40 Gew.% KNO₃
0 - 20 Gew.% NaNO₂
20 - 70 Gew.% NaOH
0 - 60 Gew.% KOH
3 - 30 Gew.% Na₂CO₃
3 - 30 Gew.% K₂CO₃
0 - 10 Gew.% Li₂CO₃

Zur Durchführung der Oxidationsschritte liegt die Haltezeit im Bereich zwischen 5 und 120 Minuten, besonders vorteilhaft im Bereich zwischen 30 und 40 Minuten. Die Temperatur liegt im Bereich zwischen 300°C und 500°C, besonders vorteilhaft im Bereich zwischen 380°C und 430°C.

In einer alternativen Ausgestaltung der Verfahren gemäß den Figuren 2 und 3 kann jeweils für den ersten Oxidationsschritt eine Salzschmelze und für den oder die weiteren Oxidationsschritte ein stark oxidierendes, alkalisches wässriges Medium, wie ein Brünierbad oder ein ähnliches Medium, eingesetzt werden.

Dieses wässrige Medium ist vorteilhaft aus folgenden Bestandteilen zusammengesetzt:
35 - 60 Gew.% Wasser
3 -15 Gew.% NaNO₃
1 - 10 Gew.% NaNO₂
0 - 5 Gew.% NaCl
0 - 5 Gew. % Natriumthiosulfat
30 - 50 Gew.% NaOH
30 - 50 Gew.% KOH
0 - 5 Gew.% LiCl
0 - 5 Gew.% Li₂NO₃
0 - 5 Gew.% Na₄P₂O₇

Besonders vorteilhaft ist das wässrige Medium aus folgenden Bestandteilen zusammengesetzt:
40 - 50 Gew.% Wasser
5 - 10 Gew.% NaNO₃
1 - 5 Gew.% NaNO₂
0,5 - 2 Gew.% NaCl
0,5 - 2 Gew.% Natriumthiosulfat
40 - 45 Gew.% NaOH

Das wässrige Medium wird im Zustand des Siedens bei einer Temperatur zwischen 120°C und 160°C, besonders vorteilhaft zwischen 135° und 140°C, gehalten. Die Behandlungszeit der Bauteile liegt dabei im Bereich zwischen 5 und 120 Minuten und beträgt besonders vorteilhaft 30 Minuten.

Figur 4 zeigt eine Variante des erfindungsgemäßen Verfahrens in Form eines QP-Prozesses. Das Verfahren gemäß Figur 4 unterscheidet sich vom Verfahren gemäß Figur 2 nur dadurch, dass anstelle zweier Oxidationen nur eine Oxidation (Q) der Bauteile durchgeführt werden muss. Obwohl vor dem Polieren (P) nur ein Oxidationsschritt durchgeführt wird, müssen die Bauteile nach Polieren nicht nochmals oxidiert werden.

Dies beruht darauf, dass der Oxidationsschritt beim Verfahren gemäß Figur 1 mit einer speziellen, Lithiumionen enthaltenden Salzschmelze durchgeführt wird. Die Salzschmelze enthält dabei Lithiumionen (Li⁺) in einer Konzentration von mindestens 0,25 bis 9,0 %. Bevorzugt ist eine Konzentration der Lithiumionen von 1 bis 2 Gew. %. Die Lithumionen werden vorzugsweise in Form der Salze Lithiumcarbonat (Li₂CO₃), Lithiumnitrat (LiNO₃) oder Lithiumchlorid (LiCl) eingebracht. Bei Anwesenheit von Lithiumionen im oxidierenden Medium bildet sich auf den Bauteiloberflächen nicht nur Eisenoxid Fe₃O₄, sondern eine Mischung aus Fe₃O₄ mit Oxiden und Doppeloxiden des Lithiums, etwa Li₂Fe₃O₅, Li₂Fe₂O₄ und Li₂FeO₂. Diese - aus Mischoxiden auf gebaute - Oberfläche stellt eine besonders dichte, fest haftende und polierfähige Oberfläche dar, die es erlaubt, durch Polieren eine maximale Rauheitsprofilhöhe von Rz < 1,5 µm zu erzeugen, ohne dass die Korrosionsbeständigkeit dieser Oberfläche verloren geht.

Die die Lithiumionen enthaltende Salzschmelze ist vorteilhaft aus folgenden Bestandteilen zusammengesetzt:
20 - 50 Gew.% NaNO₃
0 - 40 Gew.% KNO₃
0 - 5 Gew.% NaNO₂
20 - 60 Gew.% NaOH
0 - 20 Gew.% KOH
3 - 25 Gew.% Na₂CO₃
3 - 15 Gew.% K₂CO₃
1 - 30 Gew.% Li₂CO₃
1 -10 Gew.% Li₂NO₃
1 -10 Gew.% LiCl

Besonders vorteilhaft ist die Salzschmelze aus folgenden Bestandteilen zusammengesetzt:
30 - 40 Gew.% NaNO₃
2 Gew.% NaNO₂
40-50 Gew.% NaOH
3 - 8 Gew.% Na₂CO₃
3 - 8 Gew.% K₂CO₃
1,5 -10 Gew.% Li₂CO₃
0 - 2 Gew.% Li₂NO₃

Prinzipiell kann die für das Verfahren gemäß Figur 4 eingesetzte Salzschmelze auch zur Durchführung des ersten Oxidationsschritts in den Verfahren gemäß den Figuren 2 und 3 eingesetzt werden.

Die folgenden Beispiele dienen zur weiteren Erläuterung des erfindungsgemäßen Verfahrens.

### Beispiel 1

104 Stück Kolbenstangen, Länge 18 cm, Durchmesser 12 mm, aus dem Werkstoff C 45 zur Verwendung in pneumatischen Ventilen wurden 90 Minuten in einem TF1®-Nitrocarburiersalzbad in einem Titantiegel unter den Standard Prozessbedingungen des sogenannten Tenifer®-Verfahrens (Cyanatgehalt 37,5 Gew. %, Cyanidgehalt 4,2 Gew. %, Eisengehalt kleiner als 200 ppm, Temperatur 580°C+/-5°C, Na+/K+-Verhältnis in der Schmelze ca. 20/80) nitrocarburiert, so dass eine Verbindungsschicht mit einer Dicke von 18 - 21 µm entstand. Die mittlere Rauigkeit, gemessen nach DIN EN ISO 4287 an zwei Stangen in Längsrichtung an drei verschiedenen Stellen und arithmetisch gemittelt, betrug vor der Behandlung an den Original Bauteilen 0,52 µm Rz.

Nach der Salzbadnitrocarburierung wurden zwei Stangen entnommen und in Wasser abgeschreckt. Bei diesen Bauteilen erhöhte sich die Rauigkeit, gemessen auf die gleiche Weise, auf einen mittleren Wert von Rz = 1,82 µm.

Die restlichen 102 Stangen wurden nach der Nitrocarburierung in einem oxidierenden Salzbad folgender Zusammensetzung behandelt:
NaNO₃ 10, NaNO₂ 3, NaOH 10, KOH 45, Na₂CO₃ 32 Gew. %. Die Temperatur betrug 410°C, die Haltezeit 20 Minuten. Die Bauteile wurden nach der Oxidation in Wasser abgekühlt und getrocknet. Sie wiesen eine matt schwarze O-berfläche auf. Zwei Stangen wurden entnommen und gemessen. Die Rauigkeit, gemessen an jeweils 3 Messstellen, lag bei einem mittleren Wert von Rz = 2,02 µm.

Die verbleibenden 100 Stangen wurden wie folgt weiter behandelt:
25 Stangen wurden mit einer Superfinish-Poliermaschine Fabrikat "Loeser" unter Verwendung eines feinen Korund-Schleifbandes der Körnung 1000 auf eine Rauigkeit von Rz = 0,57 µm poliert und in den Salzsprühtest nach DIN EN ISO 9227 eingebracht. Als Ausfallkriterium diente das Auftreten eines ersten Rostpunktes auf der funktionalen Oberfläche des Bauteils. Die mittlere Standzeit dieser Stangen, ermittelt an 23 Stangen nach dem arithmetischen Mittel, betrug 72 h, wobei keine der Stangen über eine individuelle Standzeit von 196 h kam und der Test nach 196 h abgebrochen wurde.
25 Stangen wurden mit der gleichen Poliermaschine auf die Rauigkeit von Rz = 0,57 µm geschliffen, danach jedoch noch einmal chargiert und in das oben erwähnte oxidierende Salzbad eingebracht und noch einmal 30 Minuten bei 420°C oxidiert, dann erneut in Wasser abgekühlt und getrocknet. Diese Verfahrensweise entspricht einem QPQ-Prozess gemäß Figur 1. Die so behandelten Stangen wiesen eine mittlere Rauigkeit von 0,67 µm Rz auf und wurden in den Salzsprühtest überführt. Die mittlere Standzeit dieser Stangen, gemessen an 23 Stangen und arithmetisch gemittelt, betrug 496 h, wobei eine einzelne Stange eine Standzeit von 720 h aufwies (30 Tage) und der Versuch bei 720 h abgebrochen wurde. Die Standzeit dieser Stange wurde bei der Mittelwertbildung mit 720 h eingesetzt. Als Ausfallkriterium diente das Auftreten eines ersten Rostpunktes auf der funktionalen Oberfläche.
50 Stangen wurden nach der ersten Oxidation auf dem Chargiergestell belassen und anschließend in eine zweite, oxidierende Salzschmelze folgender Zusammensetzung eingebracht:
   NaNO₃ 30, NaNO₂ 2, NaOH 39, Na₂CO₃ 20, Li₂CO₃ 9 Gew. % und bei einer Temperatur von 425°C 35 Minuten oxidiert, danach im Wasser abgeschreckt und getrocknet. Die so behandelten Stangen wiesen eine mittlere Rauigkeit von Rz = 2,14 µm auf. Die so behandelten Stangen wurden mit einer Superfinish-Poliermaschine Fabrikat "Loeser" unter Verwendung eines feinen Schleifbandes auf eine mittlere Rauigkeit von Rz = 0,62 µm poliert. Diese Verfahrensweise entspricht dem erfindungsgemäßen QQP-Ablauf gemäß Figur 2.

Die Stangen wurden danach in den Salzsprühtest nach DIN EN ISO 9227 eingebracht. Als Ausfallkriterium diente das Auftreten eines ersten Rostpunktes auf der funktionalen Oberfläche. Die mittlere Standzeit dieser Stangen, ermittelt an 48 Stangen nach dem arithmetischen Mittel, betrug 498 h, wobei der Test bei einer Zeit von 720 h abgebrochen wurde und sich noch 2 Stangen im Test ohne Rostpunkt befanden. Die Standzeit dieser 2 Stangen wurde bei der Mittelwertbildung mit 720 h eingesetzt.

Das Beispiel zeigt, dass ein Verfahrensablauf, bei dem eine nitrocarburierte Oberfläche zweimal nacheinander oxidiert und erst am Ende poliert wird, die gleiche oder sogar eine bessere Korrosionsbeständigkeit im Salzsprühtest auf weist, als eine durch das Polieren unterbrochene doppelte Oxidationsbehandlung.

### Beispiel 2:

27 Kolbenstangen aus dem Werkstoff C35 und Abmessungen von 27 cm Länge und 8 mm Durchmesser zur Verwendung als Kolbenstangen in Gasdruckfedern wurden 60 Minuten in einem TF1®-Nitrocarburiersalzbad in einem Titantiegel unter den folgenden Prozessbedingungen nach dem sogenannten Tenifer®-Verfahren (Cyanatgehalt 37,5 Gew. %, Cyanidgehalt 4,2 Gew. %, Eisengehalt kleiner als 200 ppm) bei einer Temperatur von 600°C +/-5°C nitrocarburiert, so dass eine Verbindungsschicht mit einer Dicke von 18 - 22 µm entstand. Die mittlere Rauigkeit, gemessen nach DIN EN ISO 4287 an 2 Stangen in Längsrichtung an 3 verschiedenen Stellen und arithmetisch gemittelt, betrug vor der Behandlung an den Original-Bauteilen 0,62 µm Rz. Die Kolbenstangen wurden aus dem Nitrocarburiersalzbad entnommen und in einem oxidierenden, lithiumhaltigen Salzbad 45 Minuten bei 430°C oxidiert, wobei die Schmelze aus folgenden Bestandteilen zusammengesetzt war:
NaNO₃ 30, NaNO₂ 2, NaOH 45, KOH 5, Na₂CO₃ 5, K₂CO₃ 5, Li₂CO₃ 5, LiNo₃ 3 Gew. %. Die so behandelten Stangen wiesen nach dem Abkühlen in Wasser und Reinigen eine mittlere Rauigkeit von Rz = 2,68 µm auf. Sie wurden zunächst mit Glasperlen mit einer mittleren Korngröße von 75 µm bei einem Druck von 1,5 bar gestrahlt und danach auf einer Poliermaschine Fabrikat "Loeser" mit einem Schleifband mit einer Körnung von 1000 feinst poliert auf eine mittlere Rauigkeit von Rz = 0,66 µm. Diese Verfahrensvariante entspricht dem Verfahren gemäß Figur 4. Die Stangen wurden danach in den Salzsprühtest nach DIN EN ISO 9227 eingebracht. Als Ausfallkriterium diente das Auftreten eines ersten Rostpunktes auf der Oberfläche. Die mittlere Standzeit dieser Stangen, ermittelt an 25 Stangen nach dem arithmetischen Mittel, betrug 420 h, wobei der Test bei einer Zeit von 720 h abgebrochen wurde und sich noch 1 Stange im Test ohne Rostpunkt befand. Die Standzeit dieser Stange wurde bei der Mittelwertbildung mit 720 h eingesetzt.

Das Beispiel zeigt, dass bei Verwendung einer geeigneten lithiumhaltigen Salzschmelze zum Oxidieren der Bauteiloberfläche bereits ein einfaches Oxidieren genügen kann, um die gewünschte polierfähige korrosionsbeständige Oberfläche zu erzeugen.

### Beispiel 3

27 Kolbenstangen aus dem Werkstoff C35 mit 27 cm Länge und 8 mm Durchmesser zur Verwendung als Kolbenstangen in Gasdruckfedern wurden wie in Beispiel (2) 60 Minuten in einem TF1®-Nitrocarburiersalzbad in einem Titantiegel unter den folgenden Prozessbedingungen nach dem sogenannten Tenifer®-Verfahren (Cyanatgehalt 37,5 Gew. %, Cyanidgehalt 4,2 Gew. %, Eisengehalt kleiner als 200 ppm) bei einer Temperatur von 600°C +/- 5°C nitrocarburiert, so dass eine Verbindungsschicht mit einer Dicke von 18 - 22 µm entstand. Die mittlere Rauigkeit, gemessen nach DIN EN ISO 4287 an 2 Stangen in Längsrichtung an 3 verschiedenen Stellen und arithmetisch gemittelt, betrug, wie in Beispiel (2), vor der Behandlung an den Original-Bauteilen 0,62 µm Rz. Die Kolbenstangen wurden aus dem Nitrocarburiersalzbad entnommen und in einem oxidierenden, lithiumhaltigen Salzbad 45 Minuten bei 430°C mit folgender Zusammensetzung oxidiert:
NaNO₃ 30, NaNO₂ 1 NaOH 40, KOH 5, Na₂CO₃ 10, K₂CO₃ 5, Li₂CO₃ 8 Gew. %, danach in Wasser abgeschreckt. Die noch feuchten Stangen wurden weiter in einem siedenden oxidierenden Medium bei 142°C 25 Minuten weiter oxidiert, wobei das wässrige Medium aus folgenden Komponenten zusammengesetzt war: Wasser 39, NaNO₃ 10, NaNO₂ 3, NaCl 1, Na₂S₂O₃ 1, NaOH 45, Li-NO₃ 1 Gew. %, dann entnommen, gewaschen und getrocknet. Die Stangen wurden danach auf einer Poliermaschine Fabrikat "Loeser" mit einem Schleifband mit einer Körnung von 1000 feinst poliert auf eine mittlere Rauigkeit von Rz = 0,72 µm. Diese Verfahrensvariante entspricht dem Verfahren gemäß Figur 2. Die polierten Stangen wurden in den Salzsprühtest nach DIN EN ISO 9227 eingebracht. Als Ausfallkriterium diente das Auftreten eines ersten Rostpunkts auf der Oberfläche. Die mittlere Standzeit dieser Stangen, ermittelt an 25 Stangen nach dem arithmetischen Mittel, betrug 414 h, wobei der Test bei einer Zeit von 500 h abgebrochen wurde und sich noch 1 Stange im Test ohne Rostpunkt befand. Die Standzeit dieser Stange wurde bei der Mittelwertbildung mit 500 h eingesetzt.

TF1® und Tenifer® sind eingetragene Warenzeichen der Firma Durferrit GmbH, Mannheim.

## Patentansprüche

1. Verfahren zur Erzeugung von korrosionsbeständigen Oberflächen nitrierter oder nitrocarburierter Bauteile aus Stahl, wobei die Oberflächen Rauigkeitsprofilhöhen Rz mit Rz ≤ 1,5 µm aufweisen, umfassend folgende Verfahrensschritte: Oxidation der Oberflächen der nitrierten oder nitrocarburierten Bauteile als erster Oxidationsschritt, Durchführen wenigstens einer zweiten Oxidation der Bauteiloberflächen in einem unmittelbar anschließenden Oxidationsschritt, Polieren der Bauteiloberfläche in einem abschließenden, unmittelbar auf die letzte Oxidation anschließenden Verfahrensschritt, wobei zur Durchführung sämtlicher Oxidationsschritte jeweils eine Salzschmelze eingesetzt wird, und wobei die zur Durchführung eines Oxidationsschritts verwendete Salzschmelze aus folgenden Bestandteilen zusammengesetzt ist:
10 - 50 Gew. % NaNO₃
0 - 40 Gew. % KNO₃
0 - 20 Gew. % NaNO₂
20 - 70 Gew. % NaOH
0 - 60 Gew. % KOH
3 - 30 Gew. % Na₂CO₃
3 - 30 Gew. % K₂CO₃
0 - 10 Gew. % Li₂CO₃,
wobei zur Durchführung eines Oxidationsschritts mittels einer Salzschmelze eine Haltezeit zwischen 5 und 120 Minuten, vorzugsweise zwischen 30 und 40 Minuten, und eine Temperatur zwischen 300°C und 500°C, vorzugsweise zwischen 380°C und 430°C, angewendet wird.

2. Verfahren nach Anspruch 1, **dadurch gekennzeichnet, dass** die Zusammensetzungen der für die Oxidationsschritte verwendeten Salzschmelzen unterschiedlich sind und dabei die Prozessbedingungen für die Oxidationsschritte identisch oder unterschiedlich sind, oder dass die Zusammensetzungen der für die Oxidationsschritte verwendeten Salzschmelzen identisch sind, jedoch die Prozessbedingungen für die Oxidationsschritte unterschiedlich sind.

3. Verfahren zur Erzeugung von korrosionsbeständigen Oberflächen nitrierter oder nitrocarburierter Bauteile aus Stahl, wobei die Oberflächen Rauigkeitsprofilhöhen Rz mit Rz ≤ 1,5 µm aufweisen, umfassend folgende Verfahrensschritte: Oxidation der Oberflächen der nitrierten oder nitrocarburierten Bauteile als erster Oxidationsschritt, Durchführen wenigstens einer zweiten Oxidation der Bauteiloberflächen in einem unmittelbar anschließenden vom ersten Oxidationsschritt verschiedenen Oxidationsschritt, Polieren der Bauteiloberfläche in einem abschließenden, unmittelbar auf die letzte Oxidation anschließenden Verfahrensschritt, wobei zur Durchführung des ersten Oxidationsschritts eine Salzschmelze eingesetzt wird und zur Durchführung des oder der folgenden Oxidationsschritte jeweils ein oxidierendes, alkalisches wässriges Medium, insbesondere in Form eines Brünierbads, eingesetzt wird, wobei das oxidierende, alkalische wässrige Medium aus folgenden Bestandteilen zusammengesetzt ist:
35 - 60 Gew. % Wasser
3 - 15 Gew. % NaNO₃
1 - 10 Gew. % NaNO₂
0 - 5 Gew. % NaCl
0 - 5 Gew. % Natriumthiosulfat
30 - 50 Gew. % NaOH
30 - 50 Gew. % KOH
0 - 5 5 Gew. % LiCl
0 - 5 Gew. % Li₂NO₃
0 - 5 Gew. % Na₄P₂O₇
und wobei das oxidierende, alkalische wässrige Medium im Zustand des Siedens bei einer Temperatur zwischen 120° und 160°C, vorzugsweise zwischen 135°C und 140°C, gehalten wird und die Behandlungszeit der Bauteile in dem siedenden Medium zwischen 5 und 120 Minuten, vorzugsweise 30 Minuten, beträgt, und zur Durchführung des ersten Oxidationsschritts eine Lithiumionen enthaltende Salzschmelze eingesetzt wird, und zur Durchführung des oder der weiteren Oxidationsschritte eine weitere Salzschmelze oder ein oxidierendes, alkalisches wässriges Medium eingesetzt wird, wobei die Lithiumionen enthaltende Salzschmelze aus folgenden Bestandteilen zusammengesetzt ist:
20 - 50 Gew. % NaNO₃
0 - 40 Gew. % KNO₃
0 - 5 Gew. % NaNO₂
20 - 60 Gew. % NaOH
0 - 20 Gew. % KOH
3 - 25 Gew. % Na₂CO₃
3 - 15 Gew. % K₂CO₃
1 - 30 Gew. % Lᵢ₂CO₃
1 - 10 Gew. % Li₂NO₃
1 - 10 Gew. % LiCl
oder
die Lithiumionen enthaltende Salzschmelze aus folgenden Bestandteilen zusammengesetzt ist:
30 - 40 Gew. % NaNO₃
2 Gew. % NaNO₂
40 - 50 Gew. % NaOH
3 - 8 Gew. % Na₂CO₃
3 - 8 Gew. % K₂CO₃
1,5 - 10 Gew. % Li₂CO₃
0 - 2 Gew. % Li₂NO₃.

4. Verfahren nach Anspruch 4, **dadurch gekennzeichnet, dass** das oxidierende, alkalische wässrige Medium aus folgenden Bestandteilen zusammengesetzt ist:
40 - 50 Gew. % Wasser
5 - 10 Gew. % NaNO₃
1 - 5 Gew. % NaNO₂
0,5 - 2 Gew. % NaCl
0,5 - 2 Gew. % Natriumthiosulfat
40 - 45 Gew. % NaOH

5. Verfahren nach einem der Ansprüche 1 bis 5, **dadurch gekennzeichnet, dass** bei mehr als zwei durchgeführten Oxidationen sämtliche Oxidationsschritte unmittelbar aufeinander folgend durchgeführt werden.

## Claims

1. Method of producing corrosion-resistant surfaces of nitrided or nitrocarburised components of steel, wherein the surfaces have roughness profile heights Rz with Rz ≤ 1.5 microns, comprising the following method steps: oxidation of the surfaces of the nitride or nitrocarburised components as a first oxidation step, carrying out at least one second oxidation of the component surfaces in a directly following oxidation step, and polishing the component surface in a concluding method step directly following the last oxidation, wherein for carrying out all oxidation steps in each instance a molten salt bath is used and wherein the molten salt bath used for carrying out an oxidation step is composed of the following constituents:
10 - 50 weight % NaNO₃
0 - 40 weight % KNO₃
0 - 20 weight % NaNO₂
20 - 70 weight % NaOH
0 - 60 weight % KOH
3 - 30 weight % Na₂CO₃
3 - 30 weight % K₂CO₃
0 - 10 weight % Li₂CO₃,
wherein for carrying out an oxidation step by means of a molten salt bath a holding time of between 5 and 120 minutes, preferably between 30 and 40 minutes, and a temperature of between 300° C and 500° C, preferably between 380° C and 430° C, are used.

2. Method according to claim 1, **characterised in that** the compositions of the molten salt baths used for the oxidation steps are different and **in that** case the process conditions for the oxidation steps are identical or different or that the compositions of the molten salt baths used for the oxidation steps are identical, but the process conditions for the oxidation steps are different.

3. Method of producing corrosion-resistant surfaces of nitrided or nitrocarburised components of steel, wherein the surfaces have roughness profile heights Rz with Rz ≤ 1.5 microns, comprising the following method steps: oxidation of the surfaces of the nitride or nitrocarburised components as a first oxidation step, carrying out at least one second oxidation of the component surfaces in a directly following oxidation step, and polishing the component surface in a concluding method step directly following the last oxidation, wherein for carrying out the first oxidation step a molten salt bath is used and for carrying out the following oxidation step or steps in each instance an oxidising alkaline aqueous medium, particularly in the form of a burnishing bath, is used, wherein the oxidising alkaline aqueous medium is composed of the following constituents:
25 - 60 weight % water
3 - 15 weight % NaNO₃
1 - 10 weight % NaNO₂
0 - 5 weight % NaCl
0 - 5 weight % sodium thiosulfate
30 - 50 weight % NaOH
30 - 50 weight % KOH
0 - 5 weight % LiCl
0 - 5 weight % Li₂NO₃
0 - 5 weight % Na₄P₂O₇
and wherein the oxidising alkaline aqueous medium is kept in a state of boiling at a temperature of between 120°and 160° C, preferably between 135° C and 140° C, and the treatment time of the components in the boiling medium is between 5 and 120 minutes, preferably 30 minutes, and for carrying out the first oxidation step a molten salt bath containing lithium ions is used, and for carrying out the further oxidation step or steps a further molten salt bath or an oxidising alkaline aqueous medium is used, wherein the molten salt bath containing lithium ions is composed of the following constituents:
20 - 50 weight % NaNO₃
0 - 40 weight % KNO₃
0 - 5 weight % NaNO₂
20 - 60 weight % NaOH
0 - 20 weight % KOH
3 - 25 weight % Na₂CO₃
3 - 15 weight % K₂CO₃
1 - 30 WEIGHT % Li₂CO₃
1 - 10 weight % Li₂NO₃
1 - 10 weight % LiCl
or the molten salt bath containing lithium ions is composed of the following constituents:
30 - 40 weight % NaNO₃
2 weight % NaNO₂
40 - 50 weight % NaOH
3 - 8 weight % Na₂CO₃
3 - 8 weight % K₂CO₃
1.5 - 10 weight % Li₂CO₃
0 - 2 weight % Li₂NO₃.

4. Method according to claim 3, **characterised in that** the oxidising alkaline aqueous medium is composed of the following constituents:
40 - 50 weight % water
5 - 10 weight % NaNO₃
1 - 5 weight % NaNO₂
0.5 - 2 weight % NaCl
0.5 - 2 weight % sodium thiosulfate
40 - 45 weight % NaOH.

5. Method according to any one of claims 1 to 4, **characterised in that** if more than two oxidations are carried out all oxidation steps are carried out directly in succession.

## Revendications

1. Procédé de production de surfaces résistantes à la corrosion de composants nitrurés ou nitrocarburés en acier, dans lequel les surfaces présentent des hauteurs du profil de rugosité Rz telles que Rz ≤ 1,5 µm, comprenant les étapes de procédé suivantes : oxydation des surfaces des composants nitrurés ou nitrocarburés en tant que première étape d'oxydation, mise en oeuvre d'au moins une deuxième oxydation des surfaces des composants dans une étape d'oxydation immédiatement suivante, polissage de la surface des composants dans une étape de procédé finale, suivant immédiatement la dernière oxydation, dans lequel on utilise pour la mise en oeuvre de chacune de la totalité des étapes d'oxydation un bain de sels fondus, et le bain de sels fondus utilisé pour la mise en oeuvre d'une étape d'oxydation étant composé des constituants suivants :
10 à 50 % en poids de NaNO₃
0 à 40 % en poids de KNO₃
0 à 20 % en poids de NaNO₂
20 à 70 % en poids de NaOH
0 à 60 % en poids de KOH
3 à 30 % en poids de Na₂CO₃
3 à 30 % en poids de K₂CO₃
0 à 10 % en poids de Li₂CO₃,
où, pour la mise en oeuvre de l'étape d'oxydation à l'aide d'un bain de sels fondus, on utilise un temps de séjour compris entre 5 et 120 minutes, de préférence entre 30 et 40 minutes, et une température comprise entre 300°C et 500°C, de préférence entre 380°C et 430°C.

2. Procédé selon la revendication 1, **caractérisé en ce que** les compositions des bains de sels fondus utilisés pour les étapes d'oxydation sont différentes, et les conditions de procédé, pour les étapes d'oxydation, sont alors identiques ou différentes, ou que les compositions des bains de sels fondus utilisés pour les étapes d'oxydation sont identiques, mais les conditions de procédé pour les étapes d'oxydation sont différentes.

3. Procédé pour la production de surfaces de composants nitrurés ou nitrocarburés en acier, les surfaces présentant des hauteurs du profil de rugosité Rz telles que Rz ≤ 1,5 µm, comprenant les étapes de procédé suivantes : oxydation des surfaces des composants nitrurés ou nitrocarburés en tant que première étape d'oxydation, mise en oeuvre d'au moins une deuxième oxydation des surfaces des composants dans une étape d'oxydation immédiatement suivante, différente de la première étape d'oxydation, polissage de la surface des composants dans une étape de procédé finale, suivant immédiatement la dernière oxydation, dans lequel on utilise pour la mise en oeuvre de la première étape d'oxydation un bain de sels fondus et on utilise pour la mise en oeuvre de chacun de la ou des étapes d'oxydation suivantes un milieu aqueux alcalin oxydant, en particulier sous forme d'un bain de brunissage, le milieu aqueux alcalin oxydant étant constitué des constituants suivants :
35 à 60 % en poids d'eau
3 à 15 % en poids de NaNO₃
1 à 10 % en poids de NaNO₂
0 à 5 % en poids de NaCl
0 à 5 % en poids de thiosulfate de sodium
30 à 50 % en poids de NaOH
30 à 50 % en poids de KOH
0 à 5 % en poids de LiCl
0 à 5 % en poids de Li₂NO₃
0 à 5 % en poids de Na₄P₂O₇
et dans lequel le milieu aqueux alcalin oxydant est maintenu dans un état d'ébullition à une température comprise entre 120° et 160°C, de préférence entre 135°C et 140°C, et le temps de traitement des composants dans le milieu à ébullition est compris entre 5 et 120 minutes, de préférence est de 30 minutes, et on utilise pour la mise en oeuvre de la première étape d'oxydation un bain de sels fondus contenant des ions lithium, et on utilise pour la mise en oeuvre de la ou des étapes d'oxydation supplémentaires un bain de sels fondus supplémentaire ou un milieu aqueux alcalin oxydant, le bain de sels fondus contenant des ions alcalins étant constitué des constituants suivants :
20 à 50 % en poids de NaNO₃
0 à 40 % en poids de KNO₃
0 à 5 % en poids de NaNO₂
20 à 60 % en poids de NaOH
0 à 20 % en poids de KOH
3 à 25 % en poids de Na₂CO₃
3 à 15 % en poids de K₂CO₃
1 à 30 % en poids de Li₂CO₃
1 à 10 % en poids de Li₂NO₃
1 à 10 % en poids de LiCl
ou
le bain de sels fondus contenant des ions lithium est constitué des constituants suivants :
30 à 40 % en poids de NaNO₃
2 % en poids de NaNO₂
40 à 50 % en poids de NaOH
3 à 8 % en poids de Na₂CO₃
3 à 8 % en poids de K₂CO₃
1,5 à 10 % en poids de Li₂CO₃
0 à 2 % en poids de Li₂NO₃.

4. Procédé selon la revendication 3, **caractérisé en ce que** le milieu aqueux alcalin oxydant est constitué des constituants suivants :
40 à 50 % en poids d'eau
5 à 10 % en poids de NaNO₃
1 à 5 % en poids de NaNO₂
0,5 à 2 % en poids de NaCl
0,5 à 2 % en poids de thiosulfate de sodium
40 à 45 % en poids de NaOH.

5. Procédé selon l'une des revendications 1 à 4, **caractérisé en ce que**, dans le cas de plus de deux oxydations mises en oeuvre, la totalité des étapes d'oxydation sont mises en oeuvre immédiatement les unes après les autres.
